# EUROPEAN PATENT APPLICATION

(11) **EP 3 190 493 A1**
(43) Date of publication of application: **12.07.2017**
(21) Application number: 14881573.1
(22) Date of filing: 25.09.2014
(51) Int. Cl.: G06F 3/044, G06F 3/041, G06K 7/08, G06F 3/0488

(54) **TERMINAL AND OPERATION METHOD THEREFOR, COMPUTER PROGRAM AND CARRIER**

(30) Priority: 22.07.2014 CN 201410351452
(71) Applicant: ZTE Corporation, Shenzhen, Guangdong 518057 (CN)
(72) Inventor: ZHANG, Xiaoliang, Shenzhen Guangdong 518057 (CN); FENG, Lei, Shenzhen Guangdong 518057 (CN); SUN, Weishan, Shenzhen Guangdong 518057 (CN)
(74) Representative: HGF Limited
(86) International application number: PCT/CN2014/087422
(87) International publication number: WO 2015/117340

(57) **Abstract**

Disclosed are a terminal and an operation method thereof, a computer program and a carrier. The method includes: judging, by a terminal, whether a surface of a capacitive touch screen (41) of the terminal contacts a label; herein the label includes a sensing area (21) which is made of a conducting material and has a specific shape; recognizing, by the terminal, the shape of the sensing area (21) of the label when the surface contacts the label; and executing, by the terminal, a corresponding operation according to the recognized shape.

## Description

### Technical Field

The present invention relates to the electronic field, and in particular to a terminal and an operation method thereof, a computer program and a carrier.

### Background

With the development of the mobile payment, more and more mobile phones are configured with the near field communication NFC function, and the users can easily swipe the bus card and pay the telephone charge. In addition, a NFC label also emerges in the market, and specific operations can be performed by using the mobile phones with the NFC function to scan the NFC label. The near field communication functions like NFC become more and more popular to the users, and the users can easily, quickly and interestingly perform some operations. However, to configure the NFC function for the cell phone, it is required to configure the corresponding chip and antenna for the cell phone, and the NFC function does not have the advantage on the road of pursuing thin and low-cost cell phone.

The capacitive touch screen is applied with the development of the smart phones, and the capacitive touch screen technology continues to develop. The capacitive touch screen is also known as an indispensable component of the terminals, such as, the smart phones, etc. The capacitive touch screen can not only be used to receive the signal of the finger, but also the two capacitive touch screens can transmit the signal therebetween. The signal sources for the signal collection of the capacitive touch screen are also gradually diversified.

A gesture recognition method recently appears for the capacitive touch screen, which can implement operations such as the lock screen operation, etc., through sliding the fingers on the capacitive touch screen to form different patterns, and satisfies the user to quickly achieve a certain specific application scenario very well. However, in that mode there is also a problem that the gestures of the user each time cannot be exactly the same, so there may be some misjudgment in the aspect of analyzing the user gestures.

### Summary of the Invention

Embodiments of the present invention provide a terminal and a terminal operation method, and a computer program and a carrier, which can carry out the terminal operation more easily, accurately and conveniently without increasing the cost.

An embodiment of the present invention further provides a terminal operation method. The method includes the following steps.

A terminal judges whether a surface of a capacitive touch screen of the terminal contacts a label. Herein, the label comprises a sensing area which is made of a conducting material and has a specific shape.

The terminal recognizes the shape of the sensing area of the label when the surface contacts the label.

The terminal executes a corresponding operation according to the recognized shape.

In an exemplary embodiment, the sensing area on the label is also connected to a finger contact area or ground through a wire.

In an exemplary embodiment, the step that a terminal judges whether a surface of a capacitive touch screen of the terminal contacts a label includes that:
when the terminal is in a working state, a touch screen chip of the terminal detects capacitance change information of the capacitive touch screen of the terminal in real time; when the terminal is in a standby state, the touch screen chip of the terminal detects the capacitance change information of the capacitive touch screen of the terminal periodically; and
when the touch screen chip detects that a capacitance signal of the capacitive touch screen changes and the touch screen chip collects a stable capacitance distribution area, it is judged that the capacitive touch screen contacts the sensing area of the label, and determined that the capacitive touch screen has already contacted the label.

In an exemplary embodiment, before the step that the terminal recognizes the shape of the sensing area of the label, the method further includes:
recognizing an angle of rotation of the sensing area and whether a front side and a back side of the sensing area are inversed based on a positioning plate at a specific position of the sensing area.

In an exemplary embodiment, the step that the terminal recognizes the shape of the sensing area of the label includes that:
the touch screen chip of the terminal collects capacitance signal state change information of the capacitive touch screen of the terminal, and generates a corresponding static capacitance distribution map;
the static capacitance distribution map is compared with pre-stored original matching information; and
when the static capacitance distribution map is matched with at least one piece of the original matching information, it is determined that the shape of the sensing area of the label is already recognized.

In an exemplary embodiment, when the original matching information is pre-stored in a server on Internet, the step that the terminal executes a corresponding operation according to the recognized shape comprises:
the terminal uploads the generated static capacitance distribution map to the server to retrieve matched original matching information, and executes a corresponding processing according to an operation which is corresponding to the retrieved original matching information and returned by the server.

An embodiment of the present invention further provides a terminal, including: a capacitive touch screen, a touch screen chip and a processor.

The touch screen chip is arranged to judge whether a surface of the capacitive touch screen contacts a label; recognize a shape of a sensing area of the label when the surface contacts the label. Herein, the label includes a sensing area which is made of a conducting material and has a specific shape.

The processor is arranged to execute a corresponding operation according to the recognized shape.

In an exemplary embodiment, the touch screen chip is arranged to judge whether a surface of the capacitive touch screen contacts a label by the following mode:
when the terminal is in a working state, the touch screen chip detects capacitance change information of the capacitive touch screen in real time; when the terminal is in a standby state, the touch screen chip detects the capacitance change information of the capacitive touch screen periodically; and
when the touch screen chip detects that a capacitance signal of the capacitive touch screen changes and the touch screen chip collects a stable capacitance distribution area, it is judged that what the capacitive touch screen contacts is the sensing area of the label, and determined that the capacitive touch screen has already contacted the label.

In an exemplary embodiment, the touch screen chip is arranged to recognize the shape of the sensing area of the label by the following mode:
the touch screen chip collects capacitance signal state change information of the capacitive touch screen, and generates a corresponding static capacitance distribution map; and the static capacitance distribution map is compared with pre-stored original matching information; and when the static capacitance distribution map is matched with at least one piece of the original matching information, it is determined that the shape of the sensing area of the label is already recognized.

In an exemplary embodiment, when the original matching information is pre-stored in a server on Internet, the processor is arranged to execute a corresponding operation according to the recognized shape by the following mode:
the processor uploads the generated static capacitance distribution map to the server to retrieve matched original matching information, and executes a corresponding processing according to an operation which is corresponding to retrieved original matching information and returned by the server.

An embodiment of the present invention further provides a computer program, comprising program instructions. Herein, when the program instructions are executed by a terminal, the terminal can implement the method as described above.

The present invention further provides a carrier carrying the above computer program.

In the embodiments of the present invention, the pattern information on the label is collected by using the capacitive touch screens of the cell phone and other terminals, and the information is used to fast and accurately perform a certain operation. The embodiments of the present invention can be applied to the field of mobile communication and hand-held terminal electronic device, and can greatly enhance the experience. Through the embodiments of the present invention, the specific operation that the user wants the terminal to implement can be realized quickly and conveniently by using the label, which is stable and accurate, and greatly enhances the user experience.

### Brief Description of Drawings

FIG. 1 is a diagram of a label in embodiment one.
FIG. 2 is a principle diagram of a method of fast performing a specific operation by a terminal by using the label provided in embodiment one.
FIG. 3 is a principle diagram of a method of performing a specific operation by using an internet server provided in embodiment one.
FIG. 4 is a block diagram of a terminal in embodiment one.

Description of reference signs: 21- metal plate; 22- metal wire; 23- finger touch area.

### Detailed Description

Embodiments of the present invention will be described in details by combining with the accompanying drawings.

It should be noted that, if there is no conflict, the embodiments of the present invention and various features of the embodiments can be combined with each other, which are all within the protection scope of the present invention. In addition, although the logic sequence is shown in the flow chart, in some cases, the shown or described steps can be executed in a sequence different from here.

Embodiment one, a terminal operation method includes that:
a terminal judges whether a surface of a capacitive touch screen of the terminal contacts a label; herein, the label includes a sensing area which is made of a conducting material and has a specific shape; and
the terminal recognizes the shape of the sensing area of the label when the surface of the capacitive touch screen of the terminal contacts the label; and
the terminal executes a corresponding operation according to the recognized shape.

The functions of the handheld terminal products, such as, intelligent cell phone, etc., are more and more, it is required to operate many steps to quickly find the application program or function in numerous application programs or functions, therefore, it is urgent for the user to simply and rapidly complete the operation. In addition, the capacitive touch screen has already become the standard configuration of all intelligent cell phones, and the capacitive touch screen is used to collect specific signals and then specific operations are performed. By that way, the required operations of the users can be performed conveniently and quickly, and especially in a certain application scenario, the users need such operations more. For example, when the user needs to enable the wireless fidelity WiFi function after returning home, to connect to the wireless network at home and to reduce the consumption of the 3G/4G traffic of the mobile phone; when the user gets on a car, the Bluetooth module of the mobile phone is enabled to connect the Bluetooth module of the mobile phone with the Bluetooth module of the car quickly; when the user needs to set an alarm clock, a settings interface can be quickly opened by scanning the label at the headboard, etc. In the present embodiments, the material through which the capacitance touch screen can collect a signal is made into a specific shape, which can be very stably recognized by the capacitive touch screen, therefore, it is quick and stable but also easy to achieve that the terminal with the capacitive touch screen recognizes a label with a specific shape, and executes a specific function.

In an implementation mode of the present embodiment, the label is made of plastic or paper as substrate, and the substrate is provided with a sheet metal or other conductive material as a sensing area. Herein, the sheet metal or other conductive material is made into a specific shape. The specific shape may be a specific outline, a figure, a covering area, etc., such as a cartoon pattern, a letter, a geometric figure, and the like. Accordingly, the shape recognized by the terminal includes: an outline, figure and area of the sensing area. The size of the sensing area may be scanned and recognized by the capacitive touch screen. Generally, the size of the sensing area is less than the size of the normal capacitive touch screen.

In an implementation mode of the present embodiment, the sensing area on the label is also connected to the finger contact area or the ground by a conducting wire. The grounding function is realized when a finger of the user presses the contact area. A large enough metal area also may be used as the ground.

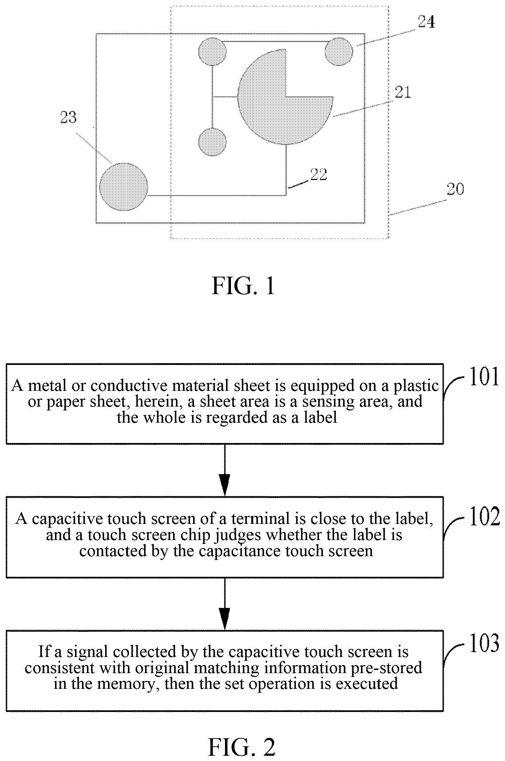

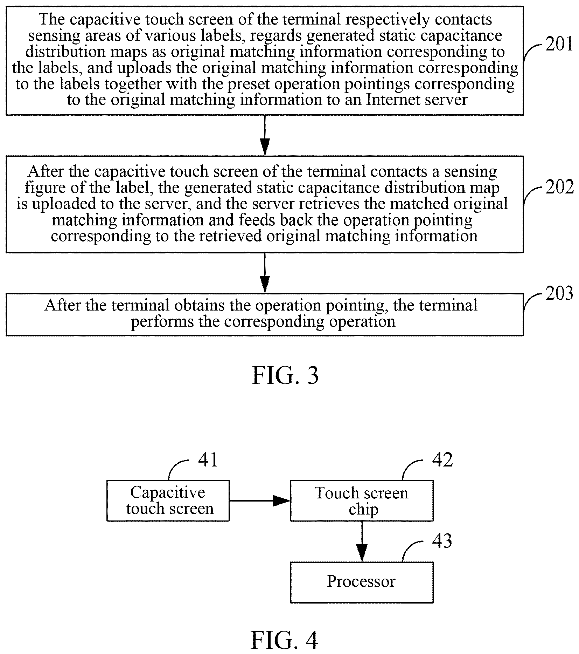

FIG. 1 is a diagram of a label provided by an embodiment of the present invention. As shown in FIG. 3, the sensing area 21 is equipped on the substrate, and the terminal senses the sensing area through the capacitive touch screen to perform the signal acquisition, and performs the corresponding operation after matching with the preset pattern in the memory. The material of the sensing area 21 equipped on the plastic or the paper is a metal or conductive material sheet, which may be made into a particular pattern, such as, a cartoon image, a letter, or a geometric figure, etc. These patterns or areas are extracted by a metal wire 22, and a finger touch area 23 is equipped in a certain area of the label. The metal wire 22 connects the sensing area 21 and the touch area 23, so the sensing area is connected with the human body through the wire 22 and the finger touch area 23, and the sensing area is grounded.

In an exemplary embodiment, the finger touch area 23 may adopt a material containing more charges, so that the touch area 23 may be used as a ground individually, and the grounding function of the sensing area is realized without contacting with the finger.

In an exemplary embodiment, the sensing area only can be sensed by the capacitive touch screen after being grounded.

In an implementation mode of the present embodiment, the step of judging, by a terminal, whether a surface of a capacitive touch screen of the terminal contacts a label may include:
when the terminal is in a working state, a touch screen chip of the terminal detects capacitance change information of the capacitive touch screen of the terminal in real time; when the terminal is in the standby state (when the whole terminal is in the standby state, there is no data exchanging between the touch screen chip and Central Processing Unit CPU of the terminal), the touch screen chip of the terminal periodically detects the capacitance change information of the capacitive touch screen of the terminal; and
when the touch screen chip detects that a capacitance signal of the capacitive touch screen changes and the touch screen chip collects a stable capacitance distribution area, it is judged that what the capacitive touch screen contacts is the sensing area of the label, and determined that the capacitive touch screen has already contacted the label.

The present implementation mode uses the sensing area of the label to judge whether the label contacts the capacitive touch screen of the terminal. If the touch screen chip detects the capacitance change signal of which the position changes, it is indicated that the user is operating the terminal (for example, a finger slides on the screen or performs a gesture operation). If there is only the capacitance change signal at one point, it is indicated that the user is performing a long-press operation or the like. If a stable capacitance distribution area is collected, then it is indicated that the capacitive touch screen contacts a conductive area beyond the fingertip area, and contacts the sensing region.

In an implementation mode of the present embodiment, before the step that the terminal recognizes the shape of the sensing area of the label, the method further may include:
recognizing an angle of rotation of the sensing area and whether a front side and a back side of the sensing area are inversed based on a positioning plate at a specific position of the sensing area.

For example, in FIG. 3, three small sensing areas 24 used for positioning are placed on three corners of the label (which may be but not limited to the sensing metal sheet), the three small sensing areas may form a rectangle. The rotation angle of the sensing area 21 in the rectangular center and whether a front side and a back side of the sensing area 21 are inversed may be recognized and judged by using the three small sensing areas. The small sensing areas 24 and the sensing area 21 are all located in the terminal scanning area 20.

In an implementation mode of the present embodiment, the step that the terminal recognizes the shape of the sensing area of the label specifically may include:
the touch screen chip of the terminal collects capacitance signal state change information of the capacitive touch screen of the terminal, and generates a corresponding static capacitance distribution map; and
the static capacitance distribution map is compared with pre-stored original matching information; and
when the static capacitance distribution map is matched with at least one piece of the original matching information, it is determined that the shape of the sensing area of the label is already recognized.

In the present implementation mode, the method may also include the step of pre-storing the original matching information, which may include:
the touch screen chip of the terminal respectively generates static capacitance distribution maps corresponding to the labels as the original matching information for storage according to the capacitive signal state change information of the capacitive touch screen when various labels contact the capacitive touch screen of the terminal.

In the present implementation mode, the original matching information may be stored to the memory of the terminal or a storage space built in the touch screen chip; and may also be uploaded to a server on the Internet for storage.

In that way, different original matching information may be stored for multiple labels respectively.

In an alternative scheme of the present implementation mode, when the original matching information is stored, the terminal may also select the operation corresponding to the original matching information.

The terminal may use the pop-up dialog box or the like for the user to select the corresponding operation. Or, the user defines the operation corresponding to the original matching information in a setting interface. A corresponding relation between the original matching information and the operation may also be established through other modes.

In the present alternative scheme, the step of the terminal executing the corresponding operation according to the recognized shape specifically may include:
the terminal performs an operation corresponding to the original matching information matched with the generated static capacitance distribution map, for example, opening a Bluetooth switch, etc.

If the original matching information is pre-stored in a server on the internet, then the terminal uploads the generated static capacitance distribution map to the server, and the server retrieves the pre-stored original matching information, and returns the operation corresponding to the successfully matched original matching information to the terminal for operation.

The present embodiment is illustrated by two specific examples hereinafter.

The first example, as shown in FIG. 2, includes steps 101-103.

In step 101, a metal or conductive material sheet is equipped on a plastic or paper sheet, herein the sheet area is a sensing area, and the whole is regarded as a label.

In step 102, the capacitive touch screen of the terminal is close to the label, and the touch screen chip judges whether the label is contacted by the capacitance touch screen.

The step 102 may include the following operations.

When the terminal is in a working state, the touch screen chip detects the capacitance change information of the capacitance touch screen in real time. When the touch screen chip detects the capacitance change signal of which the position changes, it is indicated that the user is operating. When the touch screen chip detects that the capacitance signal changes and the touch screen chip collects a stable capacitance distribution area, it is indicated that what the touch screen chip contacts is the sensing area of the label. When the touch screen chip determines that it is the sensing area of the label, it is determined that the label contacts the terminal.

When the terminal is in a standby state, the whole terminal is in the standby state, now there is no data exchanging between the touch screen chip and the terminal CPU, and the touch screen chip periodically detects the capacitance change information of the capacitance touch screen. When the touch screen chip detects the capacitance change signal of which the position changes, it is indicated that the user is operating. When the touch screen chip detects that the capacitance signal changes and the touch screen chip collects a stable capacitance distribution area, it is indicated that what the touch screen chip contacts is the sensing area of the label. When the touch screen chip determines that it is the sensing area of the label, it is determined that the label contacts the terminal.

In step 103, the signal collected by the capacitive touch screen is consistent with the original matching information pre-stored in the memory, and then the set operation is executed.

After the shape of the sensing area in the label is detected in the step 102, the shape (the static capacitance distribution map) is matched with the original matching information pre-stored in the touch screen chip or the memory built in the terminal. It is determined that the sensing area of the label is already detected when the static capacitance distribution map is consistent with the original matching information. Herein, the step of pre-storing the original matching information includes: the terminal generates the original matching information according to the capacitance signal state change information generated when the label contacts the capacitive touch screen of the terminal, and then stores the original matching information into the terminal memory or the storage space built in the touch screen chip.

Herein, when the matching is successful, the operation corresponding to the pre-stored original matching information is started. Herein, when the terminal obtains the pattern in the label for the first time, the terminal may prompt the user which operation is pointed by the pattern; and the user selects an operation, the correspondence between the operation and the original matching information is completed after confirmation.

By taking the Bluetooth as an example, the capacitive touch screen of the terminal collects a static capacitance distribution map when contacting one label and regards the static capacitance distribution map as the original matching information to store in the storage area, and the original matching information is pointed to opening the Bluetooth function. When the capacitive touch screen of the terminal collects the static capacitance distribution map matched with the original matching information, the terminal opens the Bluetooth.

Herein, the terminal may not only open the Bluetooth, but also may point to opening the WiFi, opening the camera, contacts and other applications. The terminal also may perform other operations.

Herein, when the terminal is scanning a label, if the original matching information matched with the label cannot be found in the memory, the label may be regarded to be used for the first time, and the terminal provides the user with a selection of storing the original matching information of the label and pointing to a specific operation.

The second example is shown in FIG. 3, including steps 201-203.

In step 201, in a pre-set stage, the capacitive touch screen of the terminal respectively contacts the sensing areas of various labels, regards the generated static capacitance distribution maps as the original matching information corresponding to the labels, and uploads the original matching information corresponding to the labels together with the preset operation pointings corresponding to the original matching information to the Internet server.

In step 202, in a working stage, after the capacitive touch screen of the terminal contacts the sensing figure of the label, the generated static capacitance distribution map is uploaded to the server, and the server retrieves the matched original matching information and feeds back the operation pointing corresponding to the retrieved original matching information.

In step 203, after the terminal receives the operation pointing, the terminal performs the corresponding operation.

Embodiment two, a terminal, as shown in FIG. 4, includes a capacitive touch screen 41, a touch screen chip 42, and a processor 43.

The touch screen chip 42 is arranged to judge whether a surface of the capacitive touch screen 41 contacts a label; recognize a shape of a sensing area of the label when the surface contacts the label. Herein, the label includes a sensing area which is made of a conducting material and has a specific shape.

The processor 43 is arranged to execute a corresponding operation according to the recognized shape.

In an implementation mode of the present embodiment, the touch screen chip 41 judging whether a surface of the capacitive touch screen 41 of the present terminal contacts a label refers to that:
when the terminal is in a working state, the touch screen chip 42 detects capacitance change information of the capacitive touch screen 41 in real time; when the terminal is in a standby state, the touch screen chip 42 detects the capacitance change information of the capacitive touch screen 41 periodically; and
when the touch screen chip 42 detects that a capacitance signal of the capacitive touch screen 41 changes and the touch screen chip 42 collects a stable capacitance distribution area, it is judged that what the capacitive touch screen 41 contacts is the sensing area of the label, and determined that the capacitive touch screen 41 has already contacted the label.

In an implementation mode of the present embodiment, the step that the touch screen chip 42 recognizes the shape of the sensing area of the label includes:
the touch screen chip 42 collects capacitance signal state change information of the capacitive touch screen 41, and generates a corresponding static capacitance distribution map; and the static capacitance distribution map is compared with pre-stored original matching information; and when the static capacitance distribution map is matched with at least one piece of the original matching information, it is determined that the shape of the sensing area of the label is already recognized.

In the implementation mode, when the matching is not successful, it may also be prompted that the pointing operation is not set for the label, and the pointing operation may be set for the label.

In the implementation mode, when the original matching information is pre-stored in an Internet server, the processor 43 executing a corresponding operation according to the recognized shape refers to that:
the processor 43 uploads the generated static capacitance distribution map to the server to retrieve matched original matching information, and executes a corresponding processing according to an operation which is corresponding to retrieved original matching information and returned by the server 43.

If the original matching information is stored locally in the terminal, then after the label contacts the capacitive touch screen 41 of the terminal, the touch screen chip 42 detects the capacitance signal change state information, and matches the capacitance signal change state information with the pre-set original matching information. The processor 43 executes the operation pointed by the preset original matching information after the matching is successful.

Other implementation details may refer to the embodiment one.

Of course, the present invention may have a variety of other embodiments. Those skilled in the art can make the corresponding modifications and variations according to the present invention without departing from the rule and essence of the present invention. And all of these modifications or the variations should be embodied in the scope of the appending claims of the present invention.

It can be understood by those skilled in the art that all or part of steps in the above-mentioned embodiments can be fulfilled by the computer program flow. The computer program may be stored in a computer readable storage medium. The computer program is executed on the corresponding hardware platform (such as a system, a device, an apparatus, a component, etc.), and includes one of the steps of the method embodiments or its combination when being executed.

In an exemplary embodiment, all or part of the steps in the above-mentioned embodiments also may be implemented by the integrated circuits. Those steps may be made into integrated circuit modules one after another respectively, or multiple modules or steps therein are made into a single integrated circuit module for implementation. Therefore, the present invention is not limit to any specific form of the combination of the hardware and software.

Each device / function module / function unit in the above-mentioned embodiments may be implemented by the universal calculating apparatus, and they may be integrated in a single calculating apparatus, or distributed in the network made up by a plurality of calculating apparatus.

Each device / function module / function unit in the above-mentioned embodiments may be stored in a computer readable storage medium when it is implemented in the form of the software function module and is sold or used as an individual product. The above-mentioned computer readable storage medium may be a read only memory, a magnetic disk or an optical disk, etc.

### Industrial Applicability

In the embodiments of the present invention, the pattern information on the label is collected by using the capacitive touch screens of the cell phone and other terminals, and the information is used to fast and accurately perform a certain operation. The embodiments of the present invention can be applied to the field of mobile communication and hand-held terminal electronic device, and can greatly enhance the experience. Through the embodiments of the present invention, the specific operation that the user wants the terminal to implement can be realized quickly and conveniently by using the label, which is stable and accurate, and greatly enhances the user experience.

## Claims

1. A terminal operation method, comprising:
judging, by a terminal, whether a surface of a capacitive touch screen of the terminal contacts a label; wherein the label comprises a sensing area which is made of a conducting material and has a specific shape; and
recognizing, by the terminal, the shape of the sensing area of the label when the surface of the capacitive touch screen contacts the label; and
executing, by the terminal, a corresponding operation according to the recognized shape.

2. The method according to claim 1, wherein,
the sensing area on the label is also connected to a finger contact area or ground through a wire.

3. The method according to claim 1, wherein, the step of judging, by a terminal, whether a surface of a capacitive touch screen of the terminal contacts a label comprises:
when the terminal is in a working state, detecting, by a touch screen chip of the terminal, capacitance change information of the capacitive touch screen in real time; when the terminal is in a standby state, detecting, by the touch screen chip of the terminal, the capacitance change information of the capacitive touch screen periodically; and
when the touch screen chip detects that a capacitance signal of the capacitive touch screen changes and the touch screen chip collects a stable capacitance distribution area, judging that what the capacitive touch screen contacts is the sensing area of the label, and determining that the capacitive touch screen has already contacted the label.

4. The method according to claim 1, wherein, before the step of recognizing, by the terminal, the shape of the sensing area of the label, the method further comprises:
recognizing an angle of rotation of the sensing area and whether a front side and a back side of the sensing area are inversed based on a positioning plate at a specific position of the sensing area.

5. The method according to claim 1, wherein, the step of recognizing, by the terminal, the shape of the sensing area of the label comprises:
collecting, by the touch screen chip of the terminal, capacitance signal state change information of the capacitive touch screen of the terminal, and generating a corresponding static capacitance distribution map;
comparing the static capacitance distribution map with pre-stored original matching information; and
when the static capacitance distribution map is matched with at least one piece of the original matching information, determining that the shape of the sensing area of the label is already recognized.

6. The method according to claim 5, wherein, when the original matching information is pre-stored in a server on Internet, the step of executing, by the terminal, a corresponding operation according to the recognized shape comprises:
uploading, by the terminal, the generated static capacitance distribution map to the server to retrieve matched original matching information, and executing a corresponding processing according to an operation which is corresponding to the retrieved original matching information and returned by the server.

7. A terminal, comprising: a capacitive touch screen, a touch screen chip and a processor;
wherein,
the touch screen chip is arranged to judge whether a surface of the capacitive touch screen contacts a label; recognize a shape of a sensing area of the label when the surface of the capacitive touch screen contacts the label; wherein, the label comprises the sensing area which is made of a conducting material and has a specific shape; and
the processor is arranged to execute a corresponding operation according to the recognized shape.

8. The terminal according to claim 7, wherein, the touch screen chip is arranged to judge whether a surface of the capacitive touch screen contacts a label by the following mode:
when the terminal is in a working state, detecting, by the touch screen chip, capacitance change information of the capacitive touch screen in real time; when the terminal is in a standby state, detecting, by the touch screen chip, the capacitance change information of the capacitive touch screen periodically; and
when the touch screen chip detects that a capacitance signal of the capacitive touch screen changes and the touch screen chip collects a stable capacitance distribution area, judging that what the capacitive touch screen contacts is the sensing area of the label, and determining that the capacitive touch screen has already contacted the label.

9. The terminal according to claim 7, wherein, the touch screen chip is arranged to recognize a shape of a sensing area of the label by the following mode:
collecting, by the touch screen chip, capacitance signal state change information of the capacitive touch screen, and generating a corresponding static capacitance distribution map; comparing the static capacitance distribution map with pre-stored original matching information; and when the static capacitance distribution map is matched with at least one piece of the original matching information, determining that the shape of the sensing area of the label is already recognized.

10. The terminal according to claim 9, wherein, when the original matching information is pre-stored in a server on Internet, the processor is arranged to execute a corresponding operation according to the recognized shape by the following mode:
uploading, by the processor, the generated static capacitance distribution map to the server to retrieve matched original matching information, and executing a corresponding processing according to an operation which is corresponding to the retrieved original matching information and returned by the server.

11. A computer program, comprising program instructions, wherein, when the program instructions are executed by a terminal, the terminal can implement the method according to any one of claims 1-6.

12. A carrier carrying the computer program according to claim 11.
